# EUROPEAN PATENT SPECIFICATION

(11) **EP 1 484 978 B1**
(45) Date of publication and mention of the grant of the patent: **12.10.2005**
(21) Application number: 03715850.8
(22) Date of filing: 17.03.2003
(51) Int. Cl.: A21C 15/02

(54) **DEVICE AND METHOD FOR FORMING A STRIP OF DOUGH INTO A HOLLOW DOUGH PRODUCT WOUND INTO AN OVERLAPPING HELIX**
VORRICHTUNG UND VERFAHREN ZUM FORMEN EINES TEIGBANDES IN EINEM HOHLEN TEIGPRODUKT AUFGEWICKELT IN EINER GESCHUPPT ABGELEGTEN HELIX
DISPOSITIF ET PROCEDE PERMETTANT DE FA ONNER UNE BANDE DE PATE EN UN PRODUIT CREUX ENROULE DE MANIERE A FORMER UNE HELICE CHEVAUCHANTE

(30) Priority: 18.03.2002 NL 1020192
(43) Date of publication of application: 15.12.2004
(73) Proprietor: Pruve B.V., 1135 GA Edam (NL)
(72) Inventor: CLERX, Henrikus, Petrus, Maria, NL-5912 CN Venlo (NL); BEKKERS, Marinus, Franciscus, Leonardus, NL-5694 WS Son en Breugel (NL)
(74) Representative: Volmer, Johannes Cornelis
(86) International application number: PCT/NL2003/000194
(87) International publication number: WO 2003/077659

(56) References cited:
- EP-A- 0 211 356
- EP-A- 0 258 936
- US-A- 3 792 954
- US-A- 4 150 935
- US-A- 4 694 741

## Description

The invention relates to a device for forming a strip of dough into a hollow dough product wound into an overlapping helix, comprising
- a dough-strip feed means for supplying a strip of dough,
- a dough-forming device, comprising a rotatable dough mould holder which is driven with the aid of dough mould drive means and has secured to it a dough mould which tapers to a point, and
- a dough-strip transfer means for transferring a strip of dough from the dough-strip feed means to the dough mould of the dough-forming device.

A device for producing wound conical shells from strips of dough material is known from EP-A-258 936. This device comprises a feed belt on which strips of dough are supplied and an adjoining second conveyor belt to which the strips of dough are transferred, as well as a number of winding units. There is preferably also a dough pick-up means in the form of a pick-up needle which can be shot into the start of the strip of dough in order to pick it up.

The known device has a number of drawbacks which are associated with the way in which the dough is picked up. Shooting the needle into the strip of dough may cause the dough to tear, which is obviously undesirable. In addition, even a slight shift or unevenness in the strip of dough may cause the needle to miss the strip of dough. Moreover, shooting the needle into the strip of dough and withdrawing it again may cause undesirable contamination which will reduce the reliability of the device.

Therefore, it is an object of the present invention to provide a generally improved device of the type described in the preamble, in particular with an improved reliability with regard to the supply of dough, wherein the above problems are at least partially eliminated.

The invention achieves this object by means of a device according to the preamble of claim 1 which is characterized in that the device further comprises a mechanical dough-point pressure-exerting means which is designed to press the strip of dough onto the dough mould.

The fact that the dough-point pressure-exerting means simply presses the strip of dough onto the dough mould means that it does not penetrate into the strip of dough, with the result that the risk of tearing is greatly reduced and also significantly less contamination will occur. Obviously, a dough-point pressure-exerting means of this type is much less sensitive with regard to accurate positioning and/or alignment with respect to the strip of dough.

In the context of the present invention, the term dough point is intended to mean the first section of the strip of dough which is wound onto the dough mould by the dough-point pressure-exerting means. Since winding generally starts at the point of the dough mould, this generally corresponds to the point of the dough product. However, winding may also commence at the larger, opposite end of the dough product. In that case, the dough point is therefore the first piece of the strip of dough which comes into contact with the dough mould.

In the context of the present invention, a hollow dough product wound in an overlapping helix is understood primarily to mean a conical dough horn. Other shapes which taper to a point in one direction are also possible, but with regard to dough product shapes which taper to a point, neither the winding movement nor any closure of the dough product is trivial.

The dough-point pressure-exerting means may be provided in all types of variants. A roll or plate which presses the strip of dough supplied onto the dough mould is one example. To this end, the dough-point pressure-exerting means may be provided with actuating means for exerting a force on the strip of dough, or alternatively the arrangement may be selected with that intention, with the dough-point pressure-exerting means itself being in a fixed position. Other embodiments are also possible; some examples of these will be discussed below.
If some of the compressive force is exerted in a different direction, for example perpendicular to a surface of the dough mould, this part of the compressive force can, as described above, be used to press the strip of dough onto the dough mould so that winding can be carried out more reliably. This part of the force can be used, for example, to prevent the strip of dough from sliding off when winding starts. As soon as one complete turn has been made, and therefore the strip of dough overlaps itself, friction means that there will generally be no need for additional compressive force to prevent the strip of dough from sliding off.

In a preferred embodiment of the device, the dough-point pressure-exerting means is designed to press a section of the strip of dough which projects beyond the point of the dough mould around the point of the dough mould. This embodiment is eminently suitable for the production of a dough product which is closed on one side and the point of which is reliably closed by being pressed around the point of the dough mould.

The device which is known from NL-A-8602232 has been developed for the production of dough horns with an open point, since such horns can easily be filled with solid fillings, such as whipped cream and the like, as a result of ventilation via the hole at the point. This device is not suitable for reliable production of closed dough horns. Dough horns which are to be filled with a more or less liquid filling should preferably be closed at the point, since otherwise this filling can run out of the horn.

In this context, reference is made to WO96/37109, which discloses a dough product and a method for producing it. In this document, a strip of dough is wound manually round a cone. However, the point of the as yet unbaked dough product is not closed. The assumption in this case is that the dough will expand when the dough product is baked, in such a manner that the open point will close up. In practice, however, this has not proven reliable or sufficiently flexible.

The dough-point pressure-exerting means is preferably designed to exert a compressive force in the direction of the point of the dough mould, in an axial direction thereof. This compressive force is used to bend the projecting section of the strip of dough and to press it reliably around the point of the dough mould onto another section of the strip of dough. It is possible, although not necessary, for all the compressive force to be exerted in an axial direction of the dough mould.

The device according to the invention advantageously also comprises a dough-strip pressure-exerting means. This dough-strip pressure-exerting means can take over part of the action of the dough-point pressure-exerting means since it can help to press the strip of dough onto the dough mould. Pressing the point closed and pressing the strip of dough onto the dough mould are therefore effected by two separate components. This offers the advantage that the function of both components can be optimized. By way of example, the dough-strip pressure-exerting means is a guide roll or slide plate which presses the strip of dough onto the dough mould. Even when the first turn has been completed, the dough-strip pressure-exerting means can have an advantageous action, specifically by in each case pressing the next turn onto the section of the dough product which has already been wound. This results in a reliably closed dough product being formed. Obviously, it is also possible for the dough-point pressure-exerting means to combine the two functions. This can be achieved, for example, by the dough-point pressure-exerting means moving along as winding proceeds, in other words the strip of dough is pressed onto the dough mould not only at the start of winding, i.e. at the dough point, but also is pressed by the dough-point pressure-exerting means onto the new turns which follow the first turns, so that these turns adjoin one another better and the dough product reliably achieves the desired shape.

Preferably, the dough-point pressure-exerting means, on a side which faces the dough product, has a shape which, at least in the vicinity of the point of the dough mould, runs substantially parallel thereto. This ensures that the point of the dough product can be closed without the dough-point pressure-exerting means having to exert an excessively great local force on the strip of dough. In the present context, the term substantially parallel means that when the device is operating the perpendicular distance between dough-point pressure-exerting means and dough mould is never greater than double the thickness of the strip of dough used. This distance is preferably never greater than the thickness of the strip of dough, so that even more reliable pressure can be ensured by direct, pressure-exerting contact.

In a particular embodiment of the device, the dough-point pressure-exerting means is held resiliently in the device. This makes it possible to deal with irregularities in the dimensions or positioning of the dough mould and/or in, for example, the thickness of the strip of dough without an excessive pressure having to be exerted on the strip of dough locally. This expediently eliminates the risk of damage to the dough product.

The said irregularities in the shape or positioning of the dough mould could occur primarily in a particular embodiment of the device in which the dough mould is secured releasably to a dough-mould holder. In this case, dough moulds onto which a dough product has been wound can be removed from the dough-mould holder and treated further, for example baked, separately. In this device, it is then possible to use a relatively small number of dough-mould holders, whereas the number of much less expensive dough moulds is in principle unlimited. Obviously, it is necessary to provide manipulation devices for removing the dough moulds from and putting them back onto the dough-mould holders.

When the device is operating, the dough-point pressure-exerting means is advantageously rotatable under the influence of friction between the dough-point pressure-exerting means and the strip of dough on the dough mould. If the dough-point pressure-exerting means can rotate, it can do so with the strip of dough as it is being wound onto the dough mould. In that case, no harmful forces or at most very slight harmful forces, such as shear forces, will occur under the action of the dough-point pressure-exerting means. The axes of rotation of dough mould and dough-point pressure-exerting means in this case should lie in line with one another during rotation, or at least should be displaced laterally to such a small extent and/or be at such a small angle with respect to one another that there will be no adverse effects for the dough. Obviously, the possibility of the dough-point pressure-exerting means being arranged in a fixed position with respect to the dough-mould holder is not ruled out, but in that case it is preferable for that section of the surface of the dough-point pressure-exerting means which comes into contact with the strip of dough to be coated with friction-reducing materials, such as PTFE products. Also, the dough may be selected or treated in such a manner that it could slide along the surface of the dough-point pressure-exerting means with little friction.

In a particular embodiment of the device having the freely rotatable dough-point pressure-exerting means, the dough-point pressure-exerting means is provided with coupling means which increase the friction with respect to the strip of dough. The coupling means bring about reliable coupling between dough-point pressure-exerting means and strip of dough. Not only will this allow the point of the dough product to be pressed closed even more reliably, it will also enable the strip of dough to be correctly guided when winding commences.

The coupling means preferably comprise at least one needle which is suitable to be pushed into the strip of dough. The at least one needle can easily be pushed into the strip of dough, with the result that reliable coupling is produced. The coupling means more preferably comprise at least one needle which is suitable to be pressed through the strip of dough into a recess in the dough mould. This produces even more reliable, direct coupling between the dough-point pressure-exerting means and the dough mould. The person skilled in the art will be able to select the number of needles and their dimensions appropriately, partly on the basis of the properties such as the viscosity of the dough used. After the first turn or a sufficient number of turns has/have been produced, the dough-point pressure-exerting means can generally be removed from the dough product. In this case, therefore, the one or more needles will also be removed from the strip of dough. Obviously, the needles have to be selected in such a way that no contamination or at least very little contamination will occur. In this context, it is advantageous that the needles will generally be introduced transversely with respect to the surface of the strip of dough and therefore will be much shorter. Moreover, the forces to be exerted will be much lower than when a strip of dough is being picked up with the aid of needles.

In a preferred embodiment of the device according to the invention, the dough-point pressure-exerting means comprises drive means for rotating it. The drive means are designed to rotate the dough-point pressure-exerting means for at least part of the time when it is pressing onto the dough product. This even more reliably ensures that there will be no damaging forces while the point of the dough product is being pressed closed and during the start of winding. The drive means may comprise a simple electric motor, etc.

The drive means are preferably connected synchronously with the dough-mould drive means. In this case, the drive means are designed to rotate the dough-point pressure-exerting means at substantially the same rotational speed as the dough mould, although a certain difference in rotational speed could be used to press the strip of dough more firmly onto the dough mould. This ensures, in a very simple way, that there will be no differences in rotational speed between dough-point pressure-exerting means and dough mould. The coupling may be effected either mechanically or in some other way, for example electronically.

The dough mould is advantageously provided with a recess into which the strip of dough can be pressed and fixed. Alternatively or in addition, the dough mould is advantageously provided with a protuberance onto which the strip of dough can be pressed and fixed. The friction between strip of dough and dough mould can also be increased with the aid of the one or more recesses and/or protuberances. In this way, it is possible for the strip of dough to be more reliably held in place on the dough mould. In principle, the recesses and/or protuberances may be of any desired shape, for example a slot, cavity, ridge or boss.

The invention also relates to a method for forming a strip of dough into a hollow dough product wound into an overlapping helix, the method comprising the following steps:
- supplying an elongate strip of dough ; and
- winding the strip of dough into an overlapping helix shape around a dough mould which tapers to a point, the strip of dough being pressed onto the dough mould with the aid of a mechanical dough-point pressure-exerting means.

In the prior art, closed dough horns and the like have hitherto been produced by hand. In this process, a strip of dough was placed manually onto a winding unit and wound into the desired shape. This method is labour-intensive and it is only possible to achieve a limited capacity per person, and moreover there is an undesirable variation in the end result, which is undesirable during further processing.

The method according to the invention solves at least some of these problems by using a mechanical dough-point pressure-exerting means. This allows an automated method, making it possible to achieve a much higher capacity, and also provide a constant shape and quality of dough product with few if any rejects.

An advantageous embodiment of the method is characterized in that during the winding operation, a section of the strip of dough projects beyond the point of the dough mould and the hollow dough product is closed off on one side by the projecting section of the strip of dough being pressed around the point of the dough mould with the aid of a mechanical dough-point pressure-exerting means.

In the prior art, this was also done by hand. A section which projects beyond the point of the dough mould was pressed onto the dough product by hand in order to close up the dough product. However, this too is a relatively unreliable method with high levels of rejects, and is labour-intensive with a limited capacity.

It is advantageous to use a device according to the invention. The automated method, in which the winding is also or may also be automated, produces the optimum benefits when the inventive device is used. However, it is also conceivable to automate just the closing of the point of the dough product with the aid of the method according to the invention. Even this provides some benefit, in the form of an improved product quality.

The strip of dough is preferably provided with a rectangular shape from which one corner has been cut off in the shape of a triangle. If a strip of dough of this shape is used, there is not too much overlap at the first turns of the strip of dough. In this case, the bevel of the piece which has been cut off is preferably equal to the pitch angle which the strip of dough adopts with respect to the dough-mould holder. Consequently, if a strip of dough is supplied at an oblique angle, a correct overlap can be produced. A short side of the strip of dough is advantageously cut off to form a triangular point, in which case, therefore, two original, adjacent corners are bevelled. In addition to a correct overlap from the outset, this also prevents the overlap from becoming too large in subsequent turns. Normally, on account of the small dimensions of the dough mould in the vicinity of its tip, excessive overlap between turns of the strip of dough could occur. If a section of the strip of dough is now cut off or removed in some other suitable way, this excessive overlap is prevented and the product can be created with a better quality. The removal can be effected by single, separate cutting operations or a combined cutting operation, but also, for example, by means of a stamping operation.

A general note in this context is that all the advantages of the invention can still be achieved with a method in which the winding does not commence at the point, but rather at the largest section of the dough mould, and therefore winding takes place towards the point. In this case, the point of the dough product can be pressed closed after the winding process has been completed. By simply changing the working order, it is also possible to adapt the device according to the invention accordingly.

The invention will be explained in more detail with reference to the following description of figures, by way of non-limiting example. In this description, identical reference symbols in each case denote the same components.

Fig. 1 diagrammatically depicts a plan view of a dough horn preparation installation comprising a device according to the invention.

Fig. 2a shows a diagrammatic cross section through part of a dough horn winding section II in the situation before the point of the strip of dough has been pressed around the mould, and Figure 2b shows the corresponding situation after this has taken place.

Figure 3 diagrammatically depicts a plan view of a dough horn winding section II.

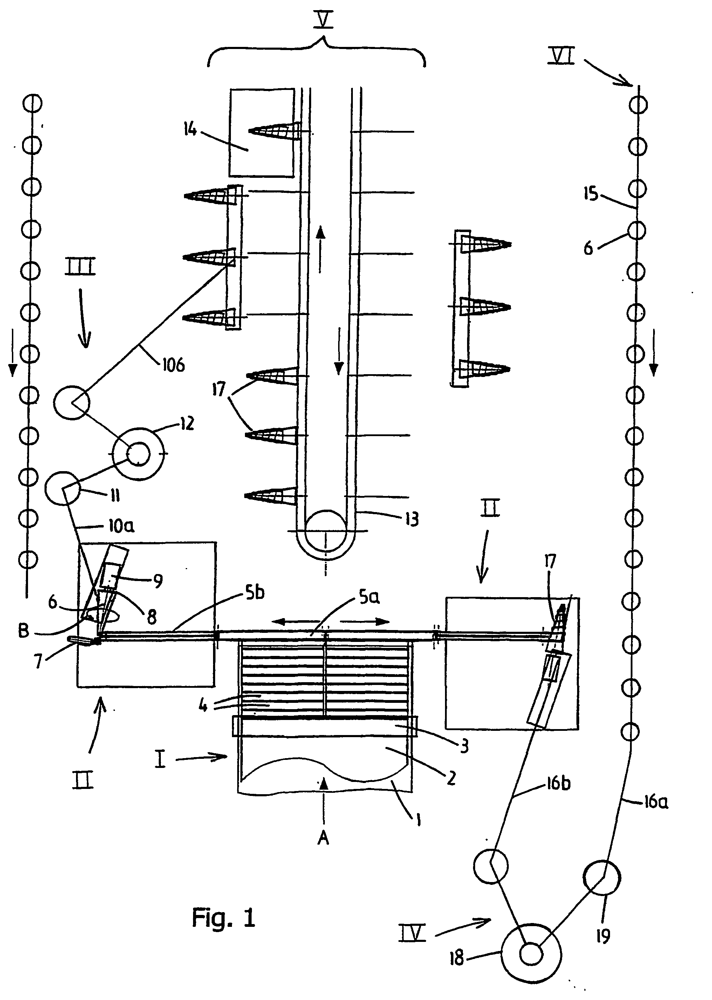

Fig. 1 shows a diagrammatic plan view of a dough horn preparation installation. This installation comprises a dough-strip feed section I and a dough-horn winding section II. The installation also comprises a first manipulation device, denoted overall by III, and a second manipulation device, denoted overall by IV, as well as a removal and processing section V and a dough-mould conveying section VI.

The dough-strip feed section I comprises a dough-strip feed belt 1, on which, when the installation is operating, a continuous length of dough 2 can be supplied. 3 denotes a dough-cutting device which cuts the length of dough 2 into parallel strips of dough 4.

Reference symbols 5a and 5b denote a pick-up device 5 in a pick-up position and a release position, respectively. The pick-up device 5 forms, as it were, a connection between the dough-strip feed section I and the dough-horn winding section II.

The pick-up device 5 comprises pick-up means for picking up and manipulating in other ways the strip of dough. This will be explained in more detail later on in the description of the figures.

The dough-strip feed belt 1 may, for example, be an endless belt with a width of at least the desired length of a strip of dough times the number of strips of dough positioned next to one another. In practice, this width will often be selected to be slightly greater. It is then possible for the length of dough 2 to be selected to be slightly wider, so that it can reliably be cut into the desired number of strips of dough 4, taking account of possible width irregularities. Any excess dough can thus be cut off with the aid of the dough-cutting device 3.

If desired, the dough-cutting device 3 can also be used to provide the strips of dough with a shape other than rectangular. By way of example, a corner can be cut off the rectangular strip of dough, so that an excessive overlap does not occur during winding. It is also possible to provide a suitable shape of that section of the strip of dough which is to be pressed around the point of the dough mould. It should be noted that it is not necessary for the dough-cutting device to actually cut. Any other shaping method is also suitable, for example stamping and forming with the aid of a die.

The dough-horn winding section II comprises a dough mould 6, a dough-point pressure-exerting means 7, a dough-mould holder 8 and means 9 for driving and controlling the dough-mould holder.

In this case, the dough mould 6 is a conical dough mould, although other shapes of dough mould are in principle not ruled out. If a dough mould made from one piece is used, this will have to taper to a point on one side, since otherwise it will be impossible for the dough which is subsequently provided to be removed from the dough mould without breaking or tearing. Obviously, if desired it would be possible to use multipart dough moulds in order to obtain other hollow shapes for the dough product. The point of the dough mould may be pointed or blunt, depending on the desired final shape of the dough product.

In principle, the dough mould 6 can be made from any desired material, provided that this material satisfies the demands which may be imposed on it under conditions of use. Factors which may need to be considered in this context are compatibility with food products, in this case dough products, ability to withstand the preparation temperatures of the dough product, adhesion properties with respect to the dough product, etc. One example of a material which is suitable for use in the preparation of dough horns is steel, although other materials, such as certain plastics, are not ruled out. If appropriate, the dough mould may be coated with a material with desired properties, such as a PTFE product.

In operation, the dough mould 6 is secured to a dough-mould holder 8. The dough mould 6 may be secured removably or non-removably to the dough-mould holder. Non-removable securing of the dough mould to the dough-mould holder has the advantage of in principle a more simple structure of the installation as a whole, but it is then necessary to provide the same number of dough-mould holders as dough moulds which are to be baked or processed further simultaneously. The dough mould 6 is preferably secured removably to the dough-mould holder 8. In this case, it is possible to make do with a small number of dough-mould holders 8 and in principle an unlimited number of dough moulds 6.

When the dough-horn winding section II is in use, a strip of dough 4 will be supplied with the aid of the pick-up device 5 of the dough-strip feed section I. The strip of dough 4 will be wound into a continuous dough horn 17 partly with the aid of the dough-point pressure-exerting means 7 and the means 9 for driving and controlling the dough-mould holder. The properties of the dough-point pressure-exerting means 7 and the other circumstances in connection with the winding of the dough will be dealt with in more detail below.

As has already been stated, the installation as a whole may comprise two or more parallel dough-horn preparation installations. Moreover, it is possible to provide a plurality of dough-horn winding sections II, which operate in parallel, per installation. By way of example, there may be three such sections II which pick up a strip of dough 4 from the dough-strip feed belt I simultaneously or in quick succession and wind this strip of dough into a dough horn 17 on an associated dough mould 6. In this way, the capacity of an installation of this type can be increased. There is no limit to the number of winding sections, which may equally well be two or four, five, etc.

The dough mould 6 with the dough horn 17 which has been wound onto it can then be transferred to a discharge and processing section 5 with the aid of a first manipulation device III. The first manipulation device III comprises, for example, a robot arm which is shown in a pick-up position 10a and in a release position 10b, as well as pivot means 11 and actuating means 12, the latter two being indicated diagrammatically. Although this example works on the basis of a robot arm, it is also possible to use other transfer and manipulation devices which are known in the prior art.

The robot arm 10 is provided with engagement means (not shown) which are able to pick up and move the dough mould 6 together with the dough horn 17. By way of example, the engagement means may surround the dough mould at a section which is not covered with dough. It is also possible for the engagement means to be magnetic, in which case they can attract the dough mould, which in this case has to be made from a magnetizable or magnetic material, for example steel. The first manipulation device as a whole will therefore be able to transfer the assembly of dough mould 6 and dough horn 17 to the said discharge and processing section V.

Assemblies of dough moulds 6 with dough horns 17 which have been placed on the discharge belt 13 can be discharged to further processing stations. Only one of these is shown, by way of example, namely a sugar-coating unit 14, in which, by way of example, the dough horn 17 is passed through a sugar bath, so that it is provided with a layer of sugar crystals. Any other desired further processing step, including, of course, baking in an oven (not shown) can be carried out subsequently.

After the final processing step, the dough horns 17 which have been prepared can be removed from the dough mould 6 using suitable means (not shown).

The dough moulds 6 which are now empty, can be returned to the dough-horn preparation installation with the aid of a dough-mould conveyor section VI. The dough-mould conveyor section VI comprises a return belt 15, onto which the dough moulds 6 can be placed.

The dough moulds can be returned to the dough-horn winding section II with the aid of a second manipulation device IV. The second manipulation device, in a similar way to the first manipulation device, comprises, for example, a robot arm 16, which is shown in two limit positions 16a and 16b, as well as actuating means 18 and pivot means 19. Operation is in principle the same as for the first manipulation device and requires no further explanation.

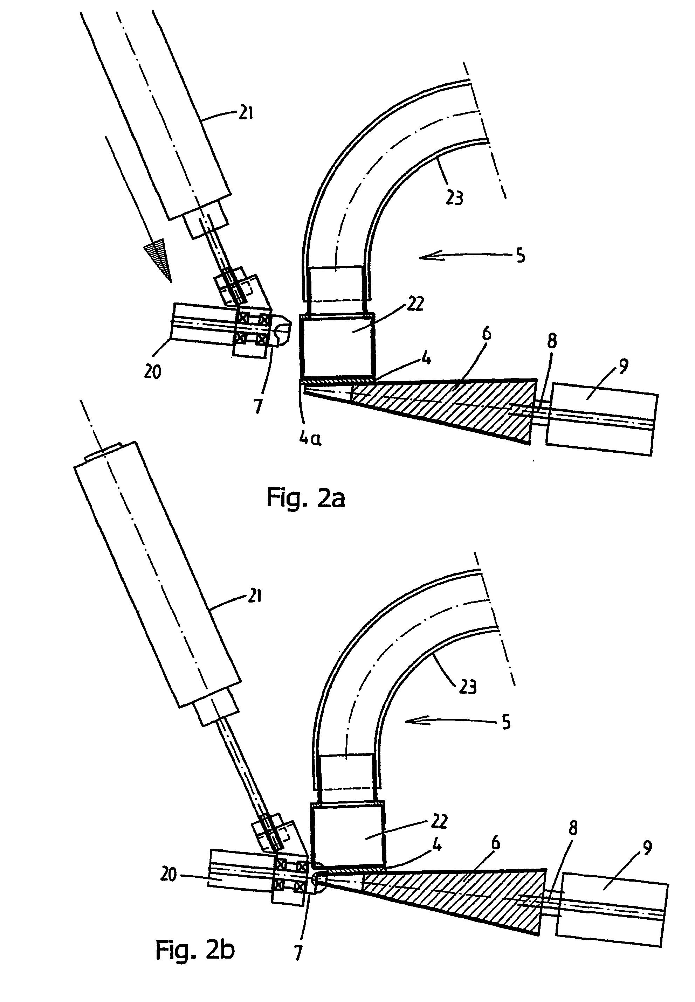

Figure 2 shows a diagrammatic cross section through part of a dough-horn winding section II. Figure 2a shows the situation before the point of the strip of dough has been pressed around the mould, and Figure 2b shows the situation after this has taken place.

Reference numeral 4 once again denotes a strip of dough which has been wound around a dough mould 6. 4a denotes a section of the strip of dough 4 which projects beyond the point of the dough mould. Dough mould 6 is positioned on a dough-mould holder 8.

Dough-mould pressure-exerting means 7 can be moved with the aid of positioning means 21 and can be made to rotate with the aid of drive means 20.

A pick-up device, in this case comprising a hollow box 22 through which air is sucked out by a suction tube 23 is denoted overall by 5.

Pick-up device 5 can be used to pick up a strip of dough 4 and feed it to the dough-horn winding section II, where the strip of dough 4 can be moved onto the dough mould 6. In this process it is ensured that a section 4a of the strip of dough projects beyond the point of the dough mould 6.

In principle, the dough mould 6 can then be made to rotate by suitable drive means (not shown). If there is sufficient friction or adhesion between strip of dough 4 and dough mould 6, the strip of dough will then wind itself around the dough mould. In this case, it is advantageous if the strip of dough is supplied from the top side with respect to the dough mould 6. In that case, the force of gravity will help with the winding process. It can be supplied, for example, with the aid of a conveyor belt or using a pick-up device described below. However, it is also possible for the strip of dough 4 to be supplied to the dough mould 6 from the underside, for example via one or more conveyor belts. In this case, by way of example, a greater adhesion is required between strip of dough and dough mould, or alternatively additional coupling means, for example a needle, are required in order to reliably bring about the winding.

Once the winding has progressed sufficiently far, which in practice generally means after at least one complete turn, the dough-point pressure-exerting means 7 can be moved into the correct position by positioning means 21 in order to press the section 4a around the dough mould. In this case, it is advantageous for both an axial compressive force, i.e. a force directed in the axial direction of the dough mould, and a radial compressive force, i.e. a force directed onto the side face of the dough mould, to be exerted. It can be seen from the figure that the dough-point pressure-exerting means has a more or less bowl-shaped inner side, in such a manner that the point of the dough horn can be closed up reliably. Obviously, the shape of the inner side of the dough-point pressure-exerting means 7 is dependent on the shape of the dough mould 6. By way of example, in the case of a dough mould which is in the form of a slightly truncated cone, the inner side of the dough-point pressure-exerting means 7 will generally be in the shape of a saucer.

It should be noted that the dough-point pressure-exerting means 7 can also be moved into position at an earlier stage of the winding. In some cases, it is advantageous for the dough-point pressure-exerting means 7 to be moved into position as soon as the strip of dough 4 has made contact with the dough mould 6. The force exerted by the dough-point pressure-exerting means 7 can then help with winding by preventing the strip of dough from slipping off the dough mould 6.

If desired, it is possible to use drive means 20 for rotating the dough-point pressure-exerting means 7. An actively driven dough-point pressure-exerting means 7 of this type reduces the risk of the dough, for example, tearing or being damaged in some other way and, moreover, makes winding even more reliable. The drive means 20 and the dough-horn drive means 9 are preferably coupled, in such a manner that they provide substantially the same circumferential velocity to the dough-point pressure-exerting means 7 and the dough mould 6.

The pick-up device 5 comprises a hollow box 22, through which air is sucked out by a suction tube 23. For this purpose, the hollow box is provided with one or more air holes on the underside. Air is sucked out through the pick-up device via suction tube 23 with the aid of air-suction means (not shown). The result of this is that objects which are located in the vicinity of the air holes and are not too heavy can be lifted and held by the pick-up device. In this way, the device 5 can, for example, pick up and move strips of dough.

As an alternative to a hollow box 22, the pick-up device 5 could also comprise a substantially flat plate with air holes, in which case the interior of the suction tube 23 is then used as a rear cavity.

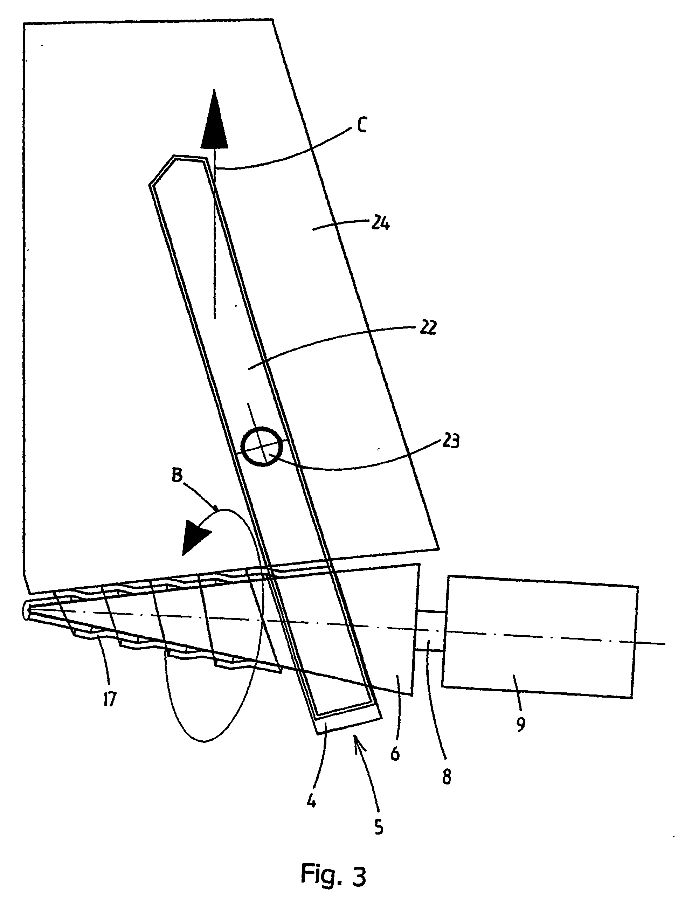

Figure 3 diagrammatically depicts a plan view of a dough-horn winding section II.

In this figure, 5 denotes the pick-up device with hollow box 22 and suction tube 23. Strip of dough 4 is wound into a dough horn 17 around dough mould 6 on dough-mould holder 8. 24 denotes a cover plate.

When the first turn of the dough horn 17 has been completed and the section 4a has been pressed over in order to close up the point, the further turns can be made. For this purpose, pick-up device 5 moves in the direction denoted by arrow C. At the same time, the dough mould 6 rotates in the orientation indicated by arrow B. This combined movement will cause the strip of dough to be wound around the dough mould in an overlapping manner. Dough-strip pressure-exerting means (not shown in more detail) can ensure that the successive turns correctly adjoin one another. In principle, the pick-up device 5 itself could also exert a suitable compressive force.

In many cases, it is advantageous if the circumferential velocity of the dough mould 6, at the location where the winding is then being carried out, is equal to the speed of advance of the strip of dough 4 with respect to the dough mould 6. This means that the strip of dough 4 is released to and wound around the dough mould 6 without stretching or tension. In other cases, it may be advantageous to select different velocities. In this case, a release velocity which is lower than the circumferential velocity of the dough mould 6 is often selected. This means that there is some tension acting on the dough of the strip of dough 4, with the result that either more taut and reliable, continuous winding can be ensured, or a slightly thinner layer of dough is created at that location. The respective drive means 9 and 20 can be actuated in a suitable way for this purpose.

The delivery of the strip of dough 4 by the pick-up device 5 takes place as follows. As soon as the strip of dough comes into contact with the dough mould 6, it will in principle stick to it to a greater or lesser extent. Should this adhesion be insufficient to enable the winding to commence, the dough-point pressure-exerting means 7 can help by applying additional pressure pressing the strip of dough onto the dough mould. As soon as the winding has commenced, part of the strip of dough 4 will have been released from the pick-up device 5. This means that a section of the one or more air holes is no longer covered by dough. Therefore, an air leak occurs in the pick-up device 5, which can have an adverse effect on the force by which the strip of dough is held in place. To counteract this effect, there is a cover plate 24 which adjoins the surface of box 22 in which the air holes are located. That section of the surface of box 22 from which the strip of dough has been removed is covered as quickly as possible by cover plate 24. In this context, as quickly possible means after approximately twice the thickness of the strip of dough. At this thickness, correct winding is still ensured, while the air leak surface area is as small as possible. Other widths of the gap between cover plate 24 and strip of dough 4 are also possible, however, for example if the suction force of the discharged air stream can be altered. If desired, it would also be possible to provide an additional air-suction means, with the aid of which air can be sucked out of the section which is no longer covered with dough.

## Claims

1. Device for forming a strip of dough (4) into a hollow dough product (17) wound into an overlapping helix, comprising
- a dough-strip feed means (1) for supplying a strip of dough (4),
- a dough-forming device, comprising a rotatable dough mould holder (8) which is driven with the aid of dough mould drive means (9) and has secured to it a dough mould (6) which tapers to a point, and
- a dough-strip transfer means (5a, 5b) for transferring a strip of dough (4) from the dough-strip feed means (1) to the dough mould (6) of the dough-forming device,
**characterized in that** the device also comprises
- a mechanical dough-point pressure-exerting means (7) which is designed to press the strip of dough (4) onto the dough mould (6).

2. Device according to claim 1, **characterized in that** the dough-point pressure-exerting means (7) is designed to press a section of the strip of dough (4) which projects beyond the point of the dough mould (6) around the point of the dough mould (6).

3. Device according to claim 1 or 2, **characterized in that** the dough-point pressure-exerting means (7) is designed to exert a compressive force in the direction of the point of the dough mould (6), in an axial direction thereof.

4. Device according to one of the preceding claims, **characterized in that** it also comprises a dough-strip pressure-exerting means.

5. Device according to one of the preceding claims, **characterized in that** the dough-point pressure-exerting means (7), on a side which faces the dough product (17), has a shape which, at least in the vicinity of the point of the dough mould (6), runs substantially parallel thereto.

6. Device according to one of the preceding claims, **characterized in that** the dough-point pressure-exerting means (7) is held resiliently in the device.

7. Device according to one of the preceding claims, **characterized in that** the dough-point pressure-exerting means (7), when the device is operating, is rotatable under the influence of friction between the dough-point pressure-exerting means (7) and the strip of dough (4) on the dough mould (6).

8. Device according to claim 7, **characterized in that** the dough-point pressure-exerting means (7) is provided with coupling means which increase the friction with respect to the strip of dough (4).

9. Device according to claim 8, **characterized in that** the coupling means comprise at least one needle which is suitable to be pushed into the strip of dough (4).

10. Device according to claim 8 or 9, **characterized in that** the coupling means comprise at least one needle which is suitable to be pushed through the strip of dough (4) into a recess in the dough mould (6).

11. Device according to one of claims 1-6, **characterized in that** the dough-point pressure-exerting means (6) comprises drive means (20) for rotating it.

12. Device according to claim 11, **characterized in that** the drive means (20) are connected synchronously with the dough-mould drive means (9).

13. Device according to one of the preceding claims, **characterized in that** the dough mould (6) is provided with a recess into which the strip of dough (4) can be pressed and fixed.

14. Device according to one of the preceding claims, **characterized in that** the dough mould (6) is provided with a protuberance onto which the strip of dough (4) can be pressed and fixed.

15. Method for forming a strip of dough (4) into a hollow dough product (17) wound into an overlapping helix, the method comprising the following steps:
- supplying an elongate strip of dough (4); and
- winding the strip of dough (4) into an overlapping helix shape around a dough mould (6) which tapers to a point, **characterized in that** the strip of dough (4) is pressed onto the dough mould (6) with the aid of a mechanical dough-point pressure-exerting means (7).

16. Method according to claim 15, **characterized in that**
- during the winding operation, a section of the strip of dough (4) projects beyond the point of the dough mould (6); and
- the hollow dough product (17) is closed off on one side by the projecting section of the strip of dough (4) being pressed around the point of the dough mould (6) with the aid of a mechanical dough-point pressure-exerting means (7).

17. Method according to claim 15 or 16, **characterized in that** use is made of a device according to one of claims 1-13.

18. Method according to one of claim 15-17, **characterized in that** the strip of dough (4) is in the shape of a rectangle, of which one point has been cut off in the shape of a triangle.

## Patentansprüche

1. Vorrichtung zum Formen eines Teigbandes (4) zu einem hohlen Teigprodukt (17) aufgewickelt in einer geschuppt abgelegten Helix, umfassend:
eine Teigbandzuführungsvorrichtung (1) zur Zuführung eines Teigbandes (4)
eine Teigformungsvorrichtung, umfassend eine drehbare Teigformhalterung (8), die mit Hilfe von Teigformantriebsvorrichtungen (9) betrieben wird, und an der eine Teigform (6), die sich zu einen Punkt verjüngt, befestigt ist, und
eine Teigbandweitergabevorrichtung (5a, 5b) zur Weitergabe eines Teigbandes von der Teigbandzuführungsvorrichtung (1) zu der Teigform (6) der Teigformungsvorrichtung, **gekennzeichnet dadurch, dass** die Vorrichtung auch umfasst
eine mechanische druckausübende Teigspitzenformvorrichtung (7), die so gestaltet ist, um das Teigband (4) auf die Teigform (6) zu pressen.

2. Vorrichtung nach Anspruch 1, **dadurch gekennzeichnet, dass** die druckausübende Teigspitzenformvorrichtung (7) so gestaltet ist, um einen Abschnitt des Teigbandes (4), der über die Spitze der Teigform (6) herausragt, um die Spitze der Teigform (6) zu pressen.

3. Vorrichtung nach Anspruch 1 oder 2, **dadurch gekennzeichnet, dass** die druckausübende Teigspitzenformvorrichtung (7) so gestaltet ist, um eine Druckkraft in die Richtung der Spitze der Teigform (6), in einer axialen Richtung davon, auszuüben.

4. Vorrichtung nach einem der vorausgehenden Ansprüche, **dadurch gekennzeichnet, dass** sie auch eine druckausübende Teigbandvorrichtung umfasst.

5. Vorrichtung nach einem der vorausgehenden Ansprüche, **dadurch gekennzeichnet, dass** die druckausübende Teigspitzenformvorrichtung (7), auf einer Seite, die dem Teigprodukt (17) gegenüberliegt, eine Form aufweist, die, zumindest in der Nähe der Spitze der Teigform (6), im Wesentlichen parallel dazu verläuft.

6. Vorrichtung nach einem der vorausgehenden Ansprüche, **dadurch gekennzeichnet, dass** die druckausübende Teigspitzenformvorrichtung elastisch in der Vorrichtung gehalten wird.

7. Vorrichtung nach einem der vorausgehenden Ansprüche, **dadurch gekennzeichnet, dass** die druckausübende Teigspitzenformvorrichtung (7), wenn die Vorrichtung in Betrieb ist, unter dem Einfluss von Reibung zwischen der druckausübenden Teigspitzenformvorrichtung (7) und dem Teigband (4) auf der Teigform (6) drehbar ist.

8. Vorrichtung nach Anspruch 7, **dadurch gekennzeichnet, dass** die druckausübende Teigspitzenformvorrichtung (7) mit Ankopplungsvorrichtungen, die die Reibung mit Bezug auf das Teigband (4) erhöhen, ausgestattet ist.

9. Vorrichtung nach Anspruch 8, **dadurch gekennzeichnet, dass** die Ankopplungsvorrichtungen mindestens eine Nadel, die geeignet ist, um in das Teigband (4) gestoßen zu werden, umfassen.

10. Vorrichtung nach Anspruch 8 oder 9, **dadurch gekennzeichnet, dass** die Ankopplungsvorrichtungen mindestens eine Nadel, die geeignet ist, durch das Teigband (4) in eine Vertiefung in der Teigform (6) gestoßen zu werden, umfassen.

11. Vorrichtung nach einem der Ansprüche 1 bis 6, **dadurch gekennzeichnet, dass** die druckausübende Teigspitzenformvorrichtung (6) Antriebsvorrichtungen (20) umfasst um sie zu drehen.

12. Vorrichtung nach Anspruch 11, **dadurch gekennzeichnet, dass** die Antriebsvorrichtungen (20) synchron mit den Teigformantriebsvorrichtungen (9) verbunden sind.

13. Vorrichtung nach einem der vorausgehenden Ansprüche, **dadurch gekennzeichnet, dass** die Teigform (6) mit einer Vertiefung, in die das Teigband (4) gepresst und fixiert werden kann, ausgestattet ist.

14. Vorrichtung nach einem der vorausgehenden Ansprüche, **dadurch gekennzeichnet, dass** die Teigform (6) mit einer Ausstülpung, auf die das Teigband (4) gedrückt oder fixiert werden kann, ausgestattet ist.

15. Verfahren zum Formen eines Teigband (4) zu einem hohlen Teigprodukt (17) aufgewickelt in einer geschuppt abgelegten Helix, wobei das Verfahren folgende Schritte umfasst:
Zuführen eines langgezogenen Teigbandes (4); und
Aufwickeln eines Teigbandes (4) in einer geschuppt abgelegte Helixform um eine Teigform (6), die sich zu einen Punkt verjüngt, **dadurch gekennzeichnet, dass** das Teigband (4) mit Hilfe einer mechanischen druckausübenden Teigspitzenformvorrichtung (7) auf die Teigform (6) gepresst wird.

16. Vorrichtung nach Anspruch 15, **dadurch gekennzeichnet, dass** während des Aufwickelungsvorganges, ein Abschnitt des Teigbandes (4) über die Spitze der Teigform (6) herausragt; und
das hohle Teigprodukt (17) auf einer Seite durch den hervorstehenden Abschnitt des Teigbandes (4) verschlossen ist, wobei der Abschnitt um die Spitze der Teigform (6) mit Hilfe einer mechanischen druckausübenden Teigspitzenformvorrichtung (7) gepresst wird.

17. Vorrichtung nach Anspruch 15 oder 16, **dadurch gekennzeichnet, dass** eine Vorrichtung gemäß einem der Ansprüche 1 bis 13 verwendet wird.

18. Vorrichtung nach einem der Ansprüche 15 bis 17, **dadurch gekennzeichnet, dass** der Teigstreifen (4) die Form eines Viereckes, von dem eine Spitze in Form eines Dreieckes abgeschnitten wurde, besitzt.

## Revendications

1. Dispositif pour former une bande de pâte (4) en un produit de pâte creux (17) enroulé en une hélice se chevauchant, comprenant
- un moyen d'alimentation de bande de pâte (1) pour fournir une bande de pâte (4),
- un dispositif de formation de pâte, comprenant un support de moule à pâte rotatif (8) qui est entraîné à l'aide de moyens d'entraînement de moule à pâte (9) et auquel est fixé un moule à pâte (6) qui est effilé en une pointe, et
- un moyen de transfert de bande de pâte (5a, 5b) pour transférer une bande de pâte (4) du moyen d'alimentation de bande de pâte (1) au moule à pâte (6) du dispositif de formation de pâte,
**caractérisé en ce que** le dispositif comprend en outre
- un moyen de compression de pointe de pâte mécanique (7) qui est conçu pour comprimer la bande de pâte (4) sur le moule à pâte (6).

2. Dispositif selon la revendication 1, **caractérisé en ce que** le moyen de compression de pointe de pâte (7) est conçu pour comprimer une section de la bande de pâte (4) qui fait saillie au-delà de la pointe du moule à pâte (6) autour de la pointe du moule à pâte (6).

3. Dispositif selon la revendication 1 ou 2, **caractérisé en ce que** le moyen de compression de pointe de pâte (7) est conçu pour exercer une force de compression dans la direction de la pointe du moule à pâte (6), dans une direction axiale de celui-ci.

4. Dispositif selon l'une quelconque des revendications précédentes, **caractérisé en ce qu'**il comprend en outre un moyen de compression de bande de pâte.

5. Dispositif selon l'une quelconque des revendications précédentes, **caractérisé en ce que** le moyen de compression de pointe de pâte (7), sur un côté qui fait face au produit de pâte (17), a une forme qui, au moins à proximité de la pointe du moule à pâte (6), s'étend sensiblement parallèlement à celui-ci.

6. Dispositif selon l'une quelconque des revendications précédentes, **caractérisé en ce que** le moyen de compression de pointe de pâte (7) est maintenu de manière résiliente dans le dispositif.

7. Dispositif selon l'une quelconque des revendications précédentes, **caractérisé en ce que** le moyen de compression de pointe de pâte (7), lorsque le dispositif est en fonctionnement, peut tourner sous l'effet du frottement entre le moyen de compression de pointe de pâte (7) et la bande de pâte (4) sur le moule à pâte (6).

8. Dispositif selon la revendication 7, **caractérisé en ce que** le moyen de compression de pointe de pâte (7) est pourvu de moyens de couplage qui augmentent le frottement vis à vis de la bande de pâte (4).

9. Dispositif selon la revendication 8, **caractérisé en ce que** les moyens de couplage comprennent au moins une aiguille qui est adaptée pour être poussée dans la bande de pâte (4).

10. Dispositif selon la revendication 8 ou 9, **caractérisé en ce que** les moyens de couplage comprennent au moins une aiguille qui est adaptée pour être poussée à travers la bande de pâte (4) dans un évidement dans le moule à pâte (6).

11. Dispositif selon l'une des revendications 1 à 6, **caractérisé en ce que** le moyen de compression de pointe de pâte (6) comprend des moyens d'entraînement (20) pour le faire tourner.

12. Dispositif selon la revendication 11, **caractérisé en ce que** les moyens d'entraînement (20) sont raccordés de manière synchrone aux moyens d'entraînement de moule à pâte (9).

13. Dispositif selon l'une quelconque des revendications précédentes, **caractérisé en ce que** le moule à pâte (6) est pourvu d'un évidement dans lequel la bande de pâte (4) peut être comprimée et fixée.

14. Dispositif selon l'une quelconque des revendications précédentes, **caractérisé en ce que** le moule à pâte (6) est pourvu d'une protubérance sur laquelle la bande de pâte (4) peut être comprimée et fixée.

15. Procédé pour former une bande de pâte (4) en un produit de pâte creux (17) enroulé en une hélice se chevauchant, le procédé comprenant les étapes suivantes :
- fourniture d'une bande de pâte allongée (4) ; et
- enroulement de la bande de pâte (4) en une forme d'hélice se chevauchant autour d'un moule à pâte (6) qui est effilée en une pointe, **caractérisé en ce que** la bande de pâte (4) est comprimée sur le moule à pâte (6) à l'aide d'un moyen de compression de pointe de pâte mécanique (7).

16. Procédé selon la revendication 15, **caractérisé en ce que**
- durant l'opération d'enroulement, une section de la bande de pâte (4) fait saillie au-delà de la pointe du moule à pâte (6) ; et
- le produit de pâte creux (17) est fermé sur un côté par la section faisant saillie de la bande de pâte (4) étant comprimée autour de la pointe du moule à pâte (6) à l'aide d'un moyen de compression de pointe de pâte mécanique (7).

17. Procédé selon la revendication 15 ou 16, **caractérisé en ce qu'**il est utilisé un dispositif selon l'une des revendications 1 à 13.

18. Procédé selon l'une des revendications 15 à 17, **caractérisé en ce que** la bande de pâte (4) est en forme de rectangle, dont une pointe a été découpée en forme de triangle.
